Europäisches Patentamt

European Patent Office

Office européen des brevets

(11) Numéro de publication: **0 134 741**
A2

(12) **DEMANDE DE BREVET EUROPEEN**

(21) Numéro de dépôt: 84401668.3

(22) Date de dépôt: 14.08.84

(51) Int. Cl.⁴: **B 05 C 21/00**
B 05 C 11/10, B 05 C 11/11
B 67 D 5/62

(30) Priorité: 17.08.83 FR 8313371

(43) Date de publication de la demande:
20.03.85 Bulletin 85/12

(84) Etats contractants désignés:
AT BE CH DE GB IT LI LU NL SE

(71) Demandeur: FRACO S.A.
9, rue du Goulet Courtry
F-77490 Chelles-Coudreaux(FR)

(72) Inventeur: Chollet, Gérard
11, rue René Levasseur
F 77490 Chelles-Les-Coudreaux(FR)

(74) Mandataire: Lepeudry-Gautherat, Thérèse et al,
CABINET ARMENGAUD JEUNE CASANOVA et
LEPEUDRY 23 boulevard de Strasbourg
F-75010 Paris(FR)

(54) Dispositif pour vider des récipients contenant des produits de viscosité élevée.

(57) L'invention concerne un dispositif pour vider un récipient (7) contenant un produit (8) de viscosité élevée, comportant des moyens (2,3,4,5) pour introduire un plateau (1), dont les dimensions correspondent sensiblement à celles de l'ouverture du récipient (7), dans celui-ci, des moyens (11) pour pomper ce produit (8), solidaires du plateau (1) et possédant une zone de prélèvement (12) débouchant sur la face frontale (10) du plateau (1) en contact avec le produit (8), ainsi que des moyens réglables pour chauffer et refroidir le plateau (1).

Selon l'invention, le plateau (1) comporte un système racleur (17) disposé au voisinage de la face frontale (10), système racleur (17) étant mis en mouvement au moyen d'un système d'entraînement (20, 21), de façon à amener le produit (8) voisin de la face frontale (10) vers la zone de prélèvement (12).

Application aux dispositifs de distribution de produits à haute viscosité.

EP 0 134 741 A2

Croydon Printing Company Ltd.

Fig.1

La présente invention concerne un dispositif pour vider des récipients contenant des produits thermofusibles ou non, dont la viscosité est très élevée - de l'ordre de 200 000 à plusieurs millions de centipoises - tels que ceux utilisés couramment pour le collage, l'étanchéité ou encore l'isolation, comme des mastics, butyls, etc....

Le dispositif couramment utilisé pour vider de tels récipients se compose d'un plateau suiveur ou pousseur qui est introduit dans les récipients et qui prend appui sur le produit de façon à comprimer celui-ci, et d'une pompe pneumatique dite à palette ou à clapet ou bien d'une pompe à engrenages, qui permet de prélever le produit.

Les inconvénients d'un tel dispositif sont très rapidement observés lorsqu'il s'agit d'obtenir un fort débit de produit. En effet, les produits visqueux ne sont alors pas amenés en quantité suffisante pour alimenter la pompe : à l'entrée de celle-ci se forme un vide au sein du produit, qui empêche la pompe d'être suffisamment nourrie, laquelle finit par se désamorcer. Elle perd alors son efficacité, et l'avancement du produit se poursuit seulement sous l'effet du plateau suiveur-pousseur.

Un des buts de la présente invention est de fournir un dispositif dont la capacité de pompage ne sera plus limitée au débit d'alimentation procuré par l'action du plateau suiveur-pousseur.

Un autre but de l'invention est de permettre l'homogénéisation du produit avant pompage , tant sur le plan physique que thermique.

L'objet de la présente invention est un dispositif de ce type qui fonctionne automatiquement.

Ces buts et ces objets ainsi que d'autres qui apparaîtront par la suite sont atteints grâce à un dispositif pour vider un récipient contenant un produit de viscosité élevée, comportant des moyens pour introduire un plateau, dont les dimensions correspondent sensiblement à celles de l'ouverture du récipient, dans celui-ci, des moyens pour pomper ce produit, solidaires du plateau possédant une zone de prélèvement débouchant sur la face frontale du plateau en contact avec le produit, ainsi que des moyens réglables pour chauffer et refroidir le plateau.

Selon l'invention, le plateau comporte un système racleur disposé au voisinage de la face frontale, le système racleur étant mis en mouvement au moyen d'un système d'entraînement de façon à amener le produit voisin de la face frontale, vers la zone de prélèvement.

De cette façon, le système racleur, associé au plateau pousseur, assure un apport constant de produit au niveau de la zone de prélèvement de la pompe, suivant un débit correspondant aux capacités de celle-ci. Le mouvement du système racleur assure une bonne homogénéisation du produit, juste avant son prélèvement.

La description qui va suivre et qui ne présente aucun caractère limitatif, doit être lue en regard des figures annexées, parmi lesquelles :

La figure 1 est une vue en élévation et partiellement en coupe du dispositif selon l'invention.

La figure 2 est une vue en perspective d'un premier système racleur selon l'invention.

La figure 3 est une vue en perspective d'un second système racleur selon l'invention.

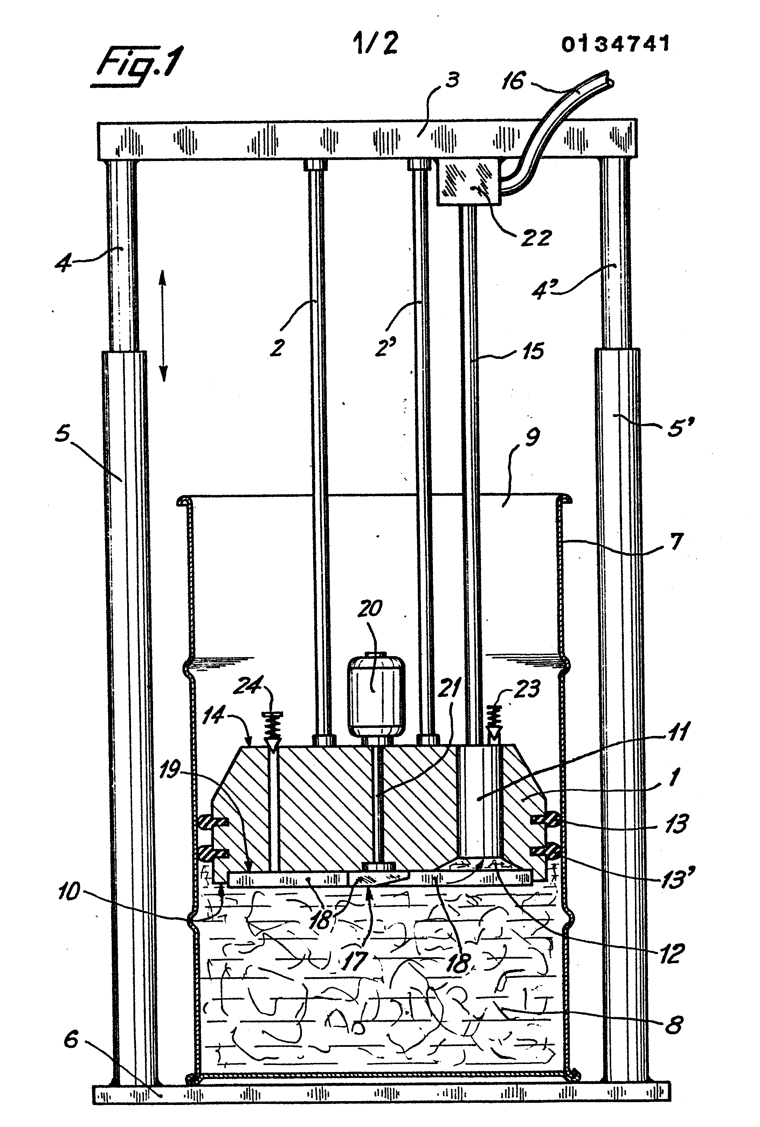

Le dispositif de la figure 1 comprend essentiellement un plateau 1 suspendu par deux tirants verticaux 2,2' fixés sous un portique horizontal 3, lui-même fixé par ses deux extrémités à deux bras mobiles 4,4' de deux vérins verticaux 5,5' situés sous le portique 3. Les vérins 5,5' sont fixés par leur base sur un socle 6. Entre les vérins 5,5' et sur le socle 6 est disposé verticalement un fût cylindrique 7 rempli d'un produit visqueux 8 qu'il s'agit d'extraire.

Le fût 7 est ouvert à sa face supérieure 9, de façon que le plateau 1, qui est circulaire et de diamètre un peu inférieur au diamètre intérieur du fût 7, puisse pénétrer dans celui-ci et exercer une pression sur le produit 8 par sa face frontale 10 de forme générale plane. Un ou plusieurs bourrelets souples 13,13' fixés à la périphérie du

plateau 1, les uns au-dessus des autres, prennent appui sur la paroi intérieure du fût 7, de façon à empêcher toute remontée du produit le long de cette paroi.

Des moyens de pompage 11 du produit non représentés en détail sont disposés dans l'épaisseur du plateau 1, à une certaine distance radiale de l'axe vertical du plateau 1. Ils débouchent sur la face frontale 10 du plateau 1 dans une zone de prélèvement 12, et sont raccordés sur la face libre 14 du plateau 1 à l'une des extrémités d'une conduite de refoulement 15 verticale qui est fixée par son autre extrémité au portique 3, et assure le transfert du produit vers une tuyauterie souple 16. Par ailleurs, des moyens réglables non représentés de chauffage et/ou de refroidissement du plateau 1 sont prévus pour favoriser l'extraction du produit, selon la nature de celui-ci.

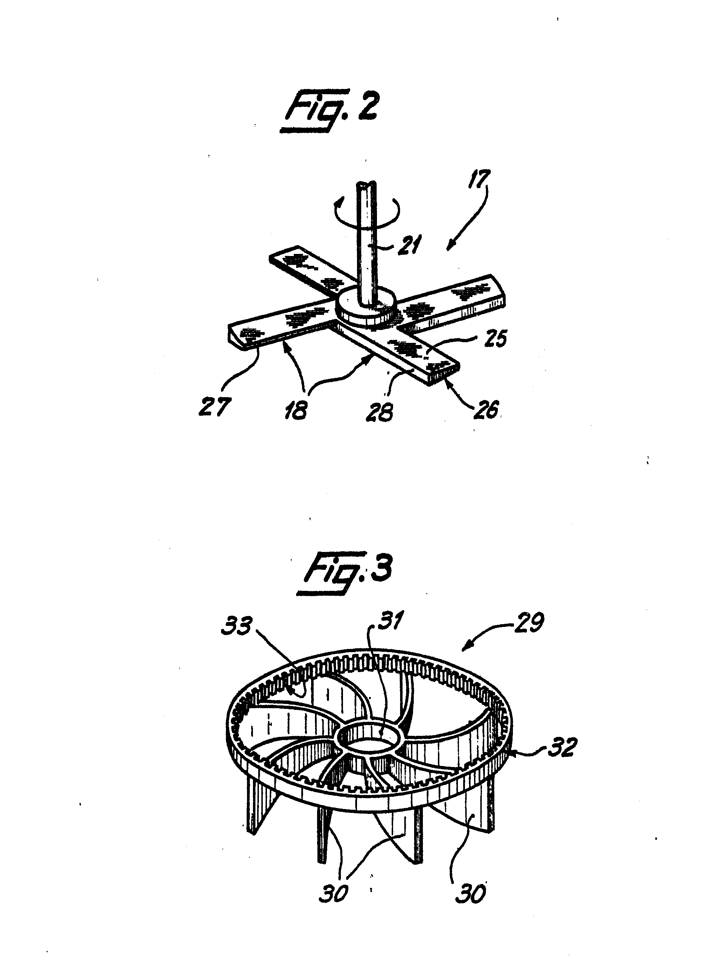

Selon l'invention, le plateau 1 comporte un système racleur 17 de forme générale plane disposé au voisinage de sa face frontale 10 et parallèlement à elle. Ce système racleur 17 est représenté plus en détail sur la figure 2. Il est constitué de quatre bras 18 ou plus disposés en croix selon des rayons du fût cylindrique 7, chacun étant relié par l'une de ses extrémités à une zone centrale commune. L'envergure de ce système racleur 17 est telle qu'il s'inscrit dans un cercle de diamètre légèrement inférieur à celui du plateau 1. Chaque bras 18 possède une face principale supérieure 25 parallèle au plan du système racleur 17 et une face principale inférieure 26 disposée de biais par rapport à ce plan de façon à présenter un bord longitudinal avant 28, ou bord d'attaque du produit, plus épais que son arrière 27, chaque bras 18 se comportant alors comme une sorte de couteau qui entame le produit.

Le système racleur 17 est logé partiellement dans un évidement circulaire 19 pratiqué dans la face frontale 10, en étant en saillie par rapport à la face frontale 10.

Le système racleur 17 est relié en son centre à un moteur électrique ou pneumatique 20 fixé verticalement au centre de la face libre 14 du plateau 1, par l'intermédiaire d'un arbre de transmission vertical 21 qui traverse le plateau 1 dans son épaisseur. Ainsi le système racleur 17 peut-il tourner dans son plan autour de l'axe de l'arbre de transmission 21.

Les moyens de pompage 11 sont décalés radialement par rapport à l'axe du plateau 1 de façon que les bras racleurs 18 viennent affleurer tour à tour la zone de prélèvement 12, lors de la mise en marche du moteur 20.

Le profil donné aux bras 18 favorise un raclement du produit à proximité du plateau 1, et assure une alimentation constante de la zone de prélèvement 12 en produit. De plus, le système racleur 17 permet de vider le fût de façon uniforme sur toute sa section.

Le système racleur 17 achemine vers la zone de prélèvement 12 le produit effectivement en contact avec le plateau 1 et évite donc le pompage de produit non régulé en température.

Pour certains types de produits, il sera avantageux de disposer la zone de prélèvement 12 au centre du plateau 1, l'entraînement en rotation du système racleur 17 s'effectuant alors à proximité des parois du fût 7, comme illustré plus loin.

Par abaissement progressif du portique 3, à l'aide des vérins 5,5', le plateau 1 maintient constamment comprimé le produit dont le niveau baisse au cours de son extraction.

L'homogénéisation du produit et son acheminement vers la zone de prélèvement 12 peuvent être réglés en fonction de la pression exercée par les vérins 5,5' et de la vitesse de rotation du système racleur 17. En fonction des besoins en produit, il est possible de régler son débit en jouant sur la pression de la pompe pneumatique, ou dans le cas d'une pompe à engrenages, grâce à un moyen de commande et de régulation avantageusement conforme à ceux décrits dans le brevet français 75 28 565.

Un bloc de filtration 22, fixé sur la portique 3, peut être interposé entre la conduite de refoulement 15 et la tuyauterie souple 16.

De façon connue en soi, une purge 23 disposée sur les moyens de pompage 11 permet d'évacuer l'air lors du début de l'opération de pompage. De même, un système de mise à l'air libre 24 permet de décoller le plateau 1 du fût 7 lorsque celui-ci est vide.

La figure 3 représente un autre système racleur 29, utilisable lorsque la zone de prélèvement est située au centre du plateau (1). Il comprend une pluralité de bras prévus sous forme d'ailettes 30 s'étendant en longueur radialement vers l'extérieur à partir d'un anneau central 31, dans le plan de celui-ci. Les ailettes 30 sont fixées à la périphérie de l'anneau 31 parleur première extrémité, et elle s'étendent en largeur verticalement par rapport au plan de l'anneau 31.

L'autre extrémité de chacune des ailettes 30 est fixée par son angle supérieur à une couronne extérieure 32 concentrique à l'anneau 31. Chaque ailette 30 a, verticale-ment, une largeur qui croît à partir de l'anneau 31 vers la couronne 32. Elle présente, par une vue en plan du système racleur 29, une forme incurvée, la face d'attaque de chaque ailette étant sa face concave. Ainsi, lors de la rotation du système racleur 29, chaque ailettte racle le produit et tend, par sa forme, à l'acheminer vers l'intérieur de l'anneau central 31, donc au voisinage de la zone de prélèvement de la pompe. La couronne 32 possède une denture 33 sur sa face tournée vers l'intérieur de façon à pouvoir coopérer avec un pignon solidaire de l'arbre d'entraînement du moteur, lequel se trouve décalé radialement par rapport à l'axe du plateau.

Naturellement, l'invention ne se limite pas aux modes de réalisations décrits ci-dessus. Par exemple, notamment dans le cas de récipients rectangulaires, on pourra prévoir un système racleur qui se déplace linéairement parallèlement à deux côtés du récipient.

L'invention trouve son application dans la distribution de produits à très haute viscosité.

## REVENDICATIONS

1 - Dispositif pour vider un récipient (7) contenant un produit (8) de viscosité élevée, comportant des moyens (2,3,4,5) pour introduire un plateau (1), dont les dimensions correspondent sensiblement à celles de l'ouverture dudit récipient (7), dans celui-ci, des moyens (11) pour pomper ce produit (8), solidaires dudit plateau (1) et possédant une zone de prélèvement (12) débouchant sur la face frontale (10) du plateau (1) en contact avec ledit produit (8), ainsi que des moyens réglables pour chauffer et/ou refroidir ledit plateau (1), caractérisé en ce que ledit plateau (1) comporte un système racleur (17) disposé au voisinage de ladite face frontale (10), ledit système racleur (17) étant mis en mouvement au moyen d'un système d'entraînement (20,21), de façon à amener ledit produit (8) voisin de ladite face frontale (10) vers ladite zone de prélèvement (12).

2 - Dispositif selon la revendication 1, caractérisé en ce que, le récipient (7) étant cylindrique, ledit système racleur (17) comporte une pluralité de bras racleurs (18, 30) disposés sensiblement suivant des rayons dudit récipient (7), et en ce qu'il est animé d'un mouvement de rotation autour de l'axe dudit récipient (7).

3 - Dispositif selon la revendication 2, caractérisé en ce que ledit système racleur (17) est relié audit système d'entraînement (20, 21) par sa région centrale, ladite zone de prélèvement (12) étant décalée radialement par rapport à l'axe dudit récipient (7).

4 - Dispositif selon la revendication 2, caractérisé en ce que ledit système racleur (29) comporte une couronne périphérique circulaire (32) qui coopère avec ledit système d'entraînement (20, 21), ladite zone de prélèvement (12) étant située au voisinage de l'axe dudit récipient (7).

5 - Dispositif selon l'une quelconque des revendications 1 à 4, caractérisé en ce que, le récipient (7) reposant sur un socle (6), lesdits moyens d'introduction du plateau (1) comprennent deux tirants verticaux (2,2') par lesquels ledit plateau (1) est suspendu à un portique (3) reposant sur deux vérins verticaux (5,5'), lesquels prennent appui sur ledit socle (6).

Fig.1

0134741

**Fig. 2**

**Fig. 3**